# EUROPÄISCHE PATENTANMELDUNG

(11) **EP 3 352 335 A1**
(43) Veröffentlichungstag der Anmeldung: **25.07.2018**
(21) Anmeldenummer: 17152669.2
(22) Anmeldetag: 23.01.2017
(51) Int. Cl.: H02K 1/20, H02K 9/19

(54) **STATOR MIT AXIAL ZENTRALER RINGFÖRMIGER VERTEILUNG EINES KÜHLFLUIDS ÜBER STATORBLECHE**

(71) Anmelder: Siemens Aktiengesellschaft, 80333 München (DE)
(72) Erfinder: Körner, Olaf, 90469 Nürnberg (DE); Wetzel, Wolfgang, 91074 Herzogenaurach (DE)

(57) **Zusammenfassung**

Ein Stator (1) einer elektrischen Maschine erstreckt sich in einer Axialrichtung von einem ersten Ende (6) zu einem zweiten Ende (7). Er weist in einem in Axialrichtung gesehen zwischen den beiden Enden (6,7) angeordneten Mittelbereich (8) eine Kühlmittelverteileinrichtung (9) für ein der Kühlmittelverteileinrichtung (9) zugeführtes Kühlfluid (10) auf. Der Stator (1) besteht vom ersten Ende (6) bis zum Mittelbereich (8) aus in Axialrichtung aufeinandergestapelten ersten Statorblechen (11), vom zweiten Ende (7) bis zum Mittelbereich (8) aus in Axialrichtung aufeinandergestapelten zweiten Statorblechen (12). Die ersten Statorbleche (11) sind derart ausgebildet, dass sie in Axialrichtung verlaufende erste Kühlkanäle (15) für das Kühlfluid (10) bilden, die zweiten Statorbleche (12) derart, dass sie in Axialrichtung verlaufende zweite Kühlkanäle (16) für das Kühlfluid (10) bilden. Die Kühlmittelverteileinrichtung (9) ist derart ausgebildet, dass sie das Kühlfluid (10) über eine Kühlmittelzuführung (17) entgegennimmt, um die Axialrichtung herum über den Umfang verteilt und den ersten und zweiten Kühlkanälen (15, 16) zuführt. Die Kühlmittelverteileinrichtung (9) besteht aus in Axialrichtung aufeinandergestapelten dritten Statorblechen (13,14), so dass der Stator (1) vom ersten Ende (6) zum zweiten Ende (7) durchgängig aus Statorblechen (11 bis 14) besteht.

## Beschreibung

Die vorliegende Erfindung geht aus von einem Stator einer elektrischen Maschine,
- wobei der Stator sich in einer Axialrichtung von einem ersten Ende zu einem zweiten Ende erstreckt,
- wobei der Stator in einem in Axialrichtung gesehen zwischen dem ersten und dem zweiten Ende angeordneten Mittelbereich eine Kühlmittelverteileinrichtung für ein der Kühlmittelverteileinrichtung zugeführtes Kühlfluid aufweist,
- wobei der Stator vom ersten Ende bis zum Mittelbereich aus in Axialrichtung aufeinandergestapelten ersten Statorblechen besteht,
- wobei die ersten Statorbleche derart ausgebildet sind, dass sie in Axialrichtung verlaufende erste Kühlkanäle für das Kühlfluid bilden,
- wobei der Stator vom zweiten Ende bis zum Mittelbereich aus in Axialrichtung aufeinandergestapelten zweiten Statorblechen besteht,
- wobei die zweiten Statorbleche derart ausgebildet sind, dass sie in Axialrichtung verlaufende zweite Kühlkanäle für das Kühlfluid bilden,
- wobei die Kühlmittelverteileinrichtung derart ausgebildet ist, dass sie das Kühlfluid über eine Kühlmittelzuführung entgegennimmt, um die Axialrichtung herum über den Umfang verteilt und den ersten und zweiten Kühlkanälen zuführt.

Die vorliegende Erfindung geht weiterhin aus von einer elektrischen Maschine mit einem Stator der eingangs genannten Art und einem Rotor, wobei der Rotor relativ zum Stator derart gelagert ist, dass er um eine mit der Axialrichtung identische Rotationsachse rotierbar ist.

Ein derartiger Stator und die zugehörige elektrische Maschine sind aus der DE 10 2013 201 501 A1 und der korrespondierenden US 2013/0 193 786 A1 bekannt.

Zur Kühlung eines Stators einer elektrischen Maschine wird oftmals ein Kühlfluid verwendet, das in Kühlkanälen des Stators geführt wird. Das Kühlfluid ist oftmals flüssig. Beispielsweise kann es sich um Wasser oder ein Öl handeln. Alternativ kann es sich um ein Gas handeln, insbesondere Luft oder ein Inertgas.

Bei der DE 10 2013 201 501 A1 ist die Kühlmittelverteileinrichtung als Platte ausgebildet, in die ein Ringkanal eingearbeitet ist. Diese Lösung weist verschiedene Nachteile auf. Insbesondere handelt es sich bei der Kühlmittelverteileinrichtung um ein zusätzliches Bauteil, das nicht zur elektromagnetischen Wechselwirkung zwischen Stator und Rotor beiträgt. Es erhöht daher insbesondere den axialen Bauraum und verringert die Leistungsdichte der elektrischen Maschine. In manchen Fällen verursacht es zusätzlich Verluste durch Wirbelströme.

Aus der EP 2 814 139 A1 ist ein Blechpaket für einen Stator einer elektrischen Maschine bekannt, dessen Statorbleche an ihrem Außenumfang eine Ausnehmung aufweisen. Die Statorbleche werden zu deckungsgleichen Teilstapeln gestapelt. Die Teilstapel sind jeweils um einen Winkel gegeneinander verdreht, der geringfügig kleiner als der Winkel ist, über den sich die Ausnehmungen erstrecken. Dadurch werden auf dem Außenumfang Kühlkanäle gebildet, die auf dem Außenumfang spiralförmig umlaufen.

Aus der US 2004/0 012 294 A1 ist eine elektrische Maschine bekannt, deren Stator an einem seiner beiden axialen Enden eine Kühlmittelverteileinrichtung und am anderen Ende eine Kühlmittelsammeleinrichtung aufweist. Ein Kühlfluid wird dem Stator über die Kühlmittelverteileinrichtung zugeführt, fließt sodann in axial verlaufenden Kühlkanälen zum anderen Ende und wird dort über die Kühlmittelsammeleinrichtung aus dem Stator abgeführt

Die Aufgabe der vorliegenden Erfindung besteht darin, Möglichkeiten zu schaffen, mittels derer die Probleme und Nachteile der DE 10 2013 201 501 A1 vermieden werden können.

Die Aufgabe wird durch einen Stator mit den Merkmalen des Anspruchs 1 gelöst. Vorteilhafte Ausgestaltungen des Stators sind Gegenstand der abhängigen Ansprüche 2 bis 7.

Erfindungsgemäß besteht die Kühlmittelverteileinrichtung aus in Axialrichtung aufeinandergestapelten dritten Statorblechen, so dass der Stator vom ersten Ende zum zweiten Ende durchgängig aus Statorblechen besteht.

Zur entsprechenden Ausgestaltung der dritten Statorbleche ist es insbesondere möglich,
- dass die dritten Statorbleche einen ersten und einen zweiten Teilstapel bilden,
- dass der erste Teilstapel an eines der ersten Statorbleche angrenzt,
- dass der zweite Teilstapel an eines der zweiten Statorbleche angrenzt,
- dass die dritten Statorbleche des ersten Teilstapels Ausnehmungen aufweisen, die in Umfangsrichtung gesehen langgestreckt sind, über den Umfang gesehen gleichmäßig verteilt sind und über den Umfang gesehen erste Winkelbereiche überdecken, und
- dass die dritten Statorbleche des zweiten Teilstapels Ausnehmungen aufweisen, die in Umfangsrichtung gesehen langgestreckt sind, über den Umfang gesehen gleichmäßig verteilt sind und über den Umfang gesehen zweite Winkelbereiche überdecken.

Es ist möglich, dass die dritten Statorbleche weitere Teilstapel umfassen, die zwischen dem ersten und dem zweiten Teilstapel angeordnet sind. Vorzugsweise grenzen jedoch der erste Teilstapel und der zweite Teilstapel aneinander an. In diesem Fall überlappen die ersten und die zweiten Winkelbereiche einander und bilden zusammen einen Vollkreis um die Axialrichtung.

Es ist möglich, dass die ersten Kühlkanäle ausschließlich in den ersten Winkelbereichen angeordnet sind und dass die zweiten Kühlkanäle ausschließlich in den zweiten Winkelbereichen angeordnet sind. Diese Ausgestaltung ist besonders einfach zu realisieren. Sie kann jedoch in manchen Fällen dazu führen, dass der Stator in Umfangsrichtung gesehen ungleichmäßig gekühlt wird. Vorzugsweise sind daher die ersten Kühlkanäle nicht nur in den ersten Winkelbereichen, sondern auch in zu den ersten Winkelbereichen komplementären dritten Winkelbereichen angeordnet und sind weiterhin die zweiten Kühlkanäle nicht nur in den zweiten Winkelbereichen, sondern auch in zu den zweiten Winkelbereichen komplementären vierten Winkelbereichen angeordnet. In diesem Fall kann eine Versorgung aller Kühlkanäle mit dem Kühlfluid - insbesondere auch der in den dritten Winkelbereichen angeordneten ersten Kühlkanäle und der in den vierten Winkelbereichen angeordneten zweiten Kühlkanäle - dadurch bewirkt werden,
- dass die dritten Statorbleche des ersten Teilstapels in den dritten Winkelbereichen mit den in den dritten Winkelbereichen angeordneten ersten Kühlkanälen kongruente oder zumindest überlappende Ausnehmungen aufweisen und
- dass die dritten Statorbleche des zweiten Teilstapels in den vierten Winkelbereichen mit den in den vierten Winkelbereichen angeordneten zweiten Kühlkanälen kongruente oder zumindest überlappende Ausnehmungen aufweisen.

Vorzugsweise sind die ersten und die zweiten Statorbleche gleichartig in dem Sinne, dass sie durch Verdrehen um einen ersten Drehwinkel um die Axialrichtung und/oder Verschwenken um 180° um eine zur Axialrichtung orthogonale Achse ineinander überführbar sind. In diesem Fall kann ein und derselbe Blechzuschnitt nach Bedarf als erstes oder als zweites Statorblech verwendet werden.

In analoger Weise sind vorzugsweise die dritten Statorbleche des ersten und des zweiten Teilstapels gleichartig in dem Sinne, dass sie durch Verdrehen um einen zweiten Drehwinkel um die Axialrichtung und/oder Verschwenken um 180° um eine zur Axialrichtung orthogonale Achse ineinander überführbar sind. In diesem Fall kann ein und derselbe Blechzuschnitt nach Bedarf als drittes Statorblech des ersten oder des zweiten Teilstapels verwendet werden.

Die Aufgabe wird weiterhin durch eine elektrische Maschine mit den Merkmalen von Anspruch 8 gelöst. Erfindungsgemäß ist der Stator der elektrischen Maschine erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: ein erstes Statorblech,
- FIG 3: ein zweites Statorblech,
- FIG 4: ein drittes Statorblech eines ersten Teilstapels,
- FIG 5: ein drittes Statorblech eines zweiten Teilstapels,
- FIG 6: ein erstes Statorblech,
- FIG 7: ein zweites Statorblech,
- FIG 8: ein drittes Statorblech eines ersten Teilstapels und
- FIG 9: ein drittes Statorblech eines zweiten Teilstapels,

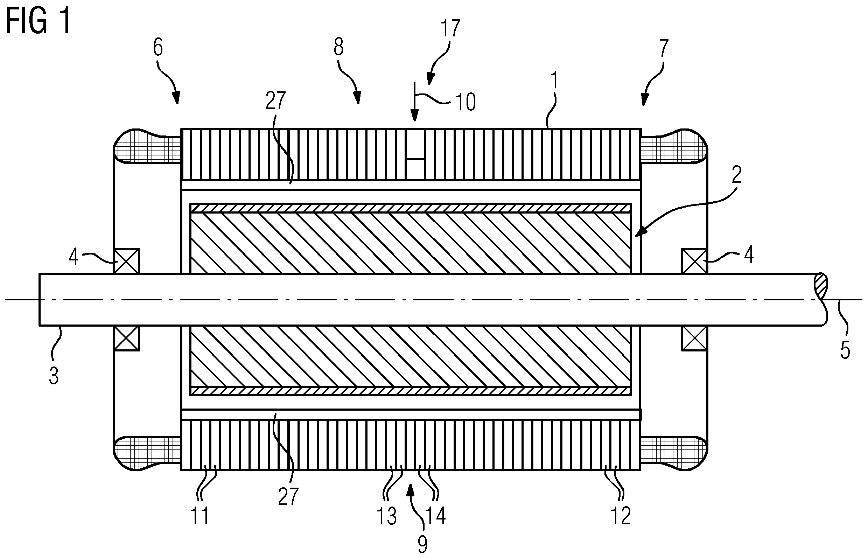

Gemäß FIG 1 weist eine elektrische Maschine einen Stator 1 und einen Rotor 2 auf. Der Rotor 2 ist auf einer Rotorwelle 3 drehfest angeordnet. In ihrer Betriebsstellung ist die Rotorwelle 3 in Lagern 4 gelagert. Die Lager 4 sind bezüglich des Stators 1 ortsfest. Beispielsweise können die Lager 4 in sogenannten Lagerschilden angeordnet sein, die ihrerseits an einem den Stator 1 umgebenden Gehäuse befestigt sind. Das Gehäuse und die Lagerschilde sind in FIG 1 nicht dargestellt, da sie für das Verständnis der vorliegenden Erfindung nicht erforderlich sind. Aufgrund der Lagerung der Rotorwelle 3 in den Lagern 4 ist die Rotorwelle 3 und mit ihr der Rotor 2 um eine Rotationsachse 5 der elektrischen Maschine rotierbar. Der Rotor 2 ist orthogonal zur Rotationsachse 5 gesehen vom Stator 1 umgeben. Die elektrische Maschine ist somit als üblicher Innenläufer ausgebildet. Prinzipiell ist jedoch auch eine Ausgestaltung der elektrischen Maschine denkbar, bei welcher der Stator 1 den Rotor 2 umgibt, die elektrische Maschine also als Außenläufer ausgebildet ist.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. Die Rotationsachse 5 definiert also die Axialrichtung der elektrischen Maschine, insbesondere für den Stator 1. "Radial" ist eine Richtung orthogonal zur Rotationsachse 5 auf die Rotationsachse 5 zu oder von ihr weg. "Tangential" ist eine Richtung, die sowohl orthogonal zur Axialrichtung als auch orthogonal zur Radialrichtung ist. "Tangential" ist also eine Richtung, die bei konstanter Axialposition und in konstantem radialem Abstand von der Rotationsachse 5 kreisförmig um die Rotationsachse 5 herum gerichtet ist.

Der Stator 1 erstreckt sich in Axialrichtung von einem ersten Ende 6 zu einem zweiten Ende 7. In einem in Axialrichtung gesehen zwischen dem ersten und dem zweiten Ende 6, 7 angeordneten Mittelbereich 8 weist der Stator 1 eine Kühlmittelverteileinrichtung 9 für ein Kühlfluid 10 auf, das der Kühlmittelverteileinrichtung 9 von radial außen zugeführt wird. Im Falle einer Ausgestaltung der elektrischen Maschine als Außenläufer würde das Kühlfluid 10 der Kühlmittelverteileinrichtung 9 von radial innen zugeführt. Der Mittelbereich 8 ist von den beiden Enden 6, 7 in der Regel gleich weit entfernt. Soweit es die Anordnung des Mittelbereichs 8 betrifft, ist der Stator 1 der elektrischen Maschine also in Axialrichtung gesehen in der Regel symmetrisch aufgebaut. Bei dem Kühlfluid 10 handelt es sich in der Regel um ein flüssiges Medium, beispielsweise ein dielektrisches (also elektrisch nicht leitendes) Öl oder um Wasser. In Einzelfällen kann es sich auch um ein gasförmiges Medium handeln, insbesondere Luft.

Vom ersten Ende 6 bis zum Mittelbereich 8 besteht der Stator 1 aus ersten Statorblechen 11. Die ersten Statorbleche 11 weisen untereinander in der Regel ein und denselben Blechzuschnitt auf. Vom zweiten Ende 7 bis zum Mittelbereich 8 besteht der Stator 1 aus zweiten Statorblechen 12. Die zweiten Statorbleche 12 weisen untereinander in der Regel ein und denselben Blechzuschnitt auf. Der Mittelbereich 8 besteht aus dritten Statorblechen 13, 14. Insbesondere die Kühlmittelverteileinrichtung 9 besteht somit ebenfalls aus den dritten Statorblechen 13, 14. Weiterhin sind alle Statorbleche 11 bis 14 in Axialrichtung aufeinander gestapelt. Der Stator 1 besteht somit vom ersten Ende 6 zum zweiten Ende 7 durchgängig aus Statorblechen 11 bis 14.

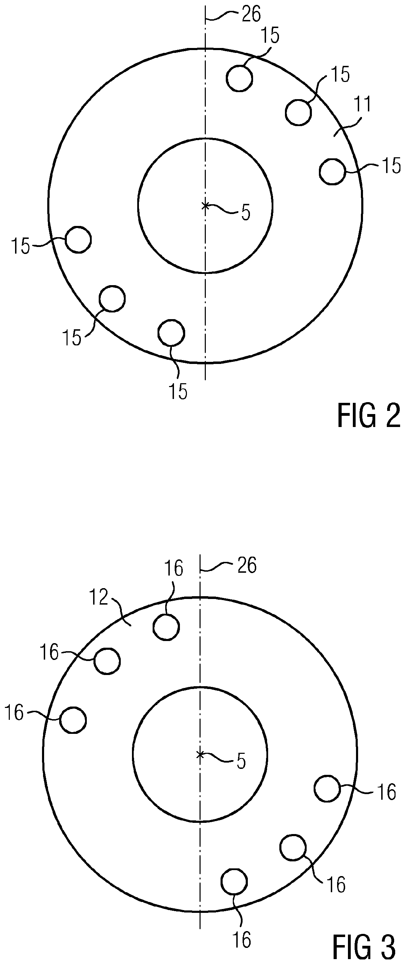

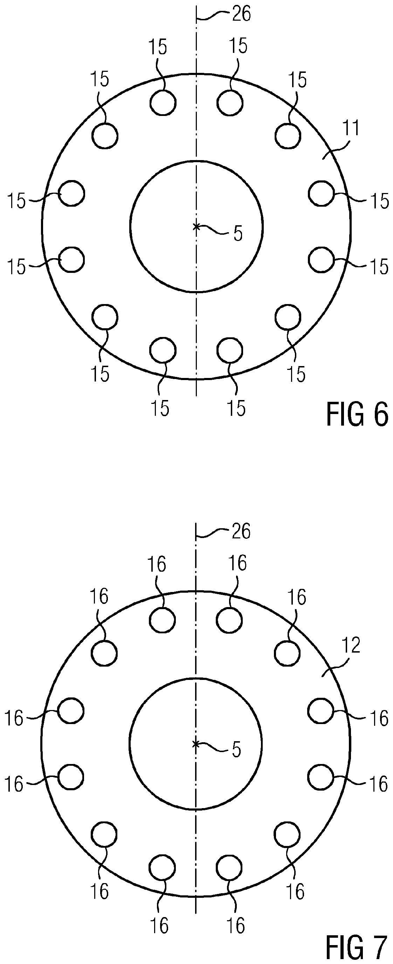

Der Aufbau der Statorbleche 11 bis 14 wird nachfolgend in Verbindung mit den FIG 2 bis 9 näher erläutert. Die FIG 2 bis 5 zeigen hierbei eine erste mögliche Ausgestaltung der Statorbleche 11 bis 14, die FIG 6 bis 9 eine zweite mögliche Ausgestaltung der Statorbleche 11 bis 14. In den FIG 2 bis 9 sind dem Rotor 2 zugewandte Statorzähne der Statorbleche 11 bis 14 nicht dargestellt. Die Statorzähne sind jedoch selbstverständlich vorhanden. Die Statorzähne aufeinanderfolgender Statorbleche 11 bis 14 fluchten miteinander. Die Zwischenräume zwischen den Statorzähnen bilden somit axial verlaufende Statornuten, in denen die Statorwicklung angeordnet ist.

Die ersten Statorbleche 11 sind derart ausgebildet, dass sie in Axialrichtung verlaufende erste Kühlkanäle 15 für das Kühlfluid 10 bilden. Beispielsweise können entsprechend der Darstellung in FIG 2 aus den ersten Statorblechen 11 gleichmäßig über den Umfang verteilt entsprechende Löcher ausgestanzt werden. Die Löcher sind nach radial außen hin (im Falle eines Außenläufers nach radial innen hin) geschlossen. Die ersten Kühlkanäle 15 sind somit innerhalb des Stators 1 angeordnet. Im Falle eines Innenläufers können die ersten Kühlkanäle 15 nach radial außen offen sein. In diesem Fall kann der Abschluss der ersten Kühlkanäle 15 nach radial außen durch ein Gehäuse (nicht dargestellt) gebildet werden, das den Stator 1 radial außen umgibt.

Die zweiten Statorbleche 12 sind derart ausgebildet, dass sie in Axialrichtung verlaufende zweite Kühlkanäle 16 für das Kühlfluid 10 bilden. Beispielsweise können entsprechend der Darstellung in FIG 3 aus den zweiten Statorblechen 12 gleichmäßig über den Umfang verteilt entsprechende Löcher ausgestanzt werden. Die Löcher sind nach radial außen hin (im Falle eines Außenläufers nach radial innen hin) geschlossen. Die zweiten Kühlkanäle 16 sind somit innerhalb des Stators 1 angeordnet. Im Falle eines Innenläufers können die zweiten Kühlkanäle 16 nach radial außen offen sein. In diesem Fall kann der Abschluss der zweiten Kühlkanäle 16 nach radial außen durch das bereits erwähnte Gehäuse gebildet werden, das den Stator 1 radial außen umgibt.

Das Kühlfluid 10 wird der Kühlmittelverteileinrichtung 9 über eine Kühlmittelzuführung 17 zugeführt. Die Kühlmittelverteileinrichtung 9 verteilt das ihr zugeführte Kühlfluid 10 tangential um die Axialrichtung herum über den Umfang und führt es den ersten und zweiten Kühlkanälen 15, 16 zu.

Für die Ausgestaltung der dritten Statorbleche 13, 14 gibt es verschiedene Möglichkeiten. Zumindest aber bilden die dritten Statorbleche 13, 14 einen ersten und einen zweiten Teilstapel von jeweils mehreren Statorblechen 13, 14. Der erste Teilstapel grenzt an eines der ersten Statorbleche 11 an. Die dritten Statorbleche des ersten Teilstapels sind mit dem Bezugszeichen 13 versehen. Der zweite Teilstapel grenzt an eines der zweiten Statorbleche 12 an. Die dritten Statorbleche des zweiten Teilstapels sind mit dem Bezugszeichen 14 versehen. Es ist möglich, dass zusätzlich zum ersten und zum zweiten Teilstapel noch mindestens ein weiterer Teilstapel vorhanden ist. In der einfachsten Ausgestaltung sind jedoch ausschließlich der erste und der zweite Teilstapel vorhanden. Der Zuschnitt der dritten Statorbleche 13 des ersten Teilstapels ist in der Regel einheitlich. Eine Ausnahme kann jedoch bezüglich der Kühlmittelzuführung 17 bestehen. In analoger Weise ist auch Zuschnitt der dritten Statorbleche 14 des zweiten Teilstapels in der Regel einheitlich. Eine Ausnahme kann auch hier bezüglich der Kühlmittelzuführung 17 bestehen.

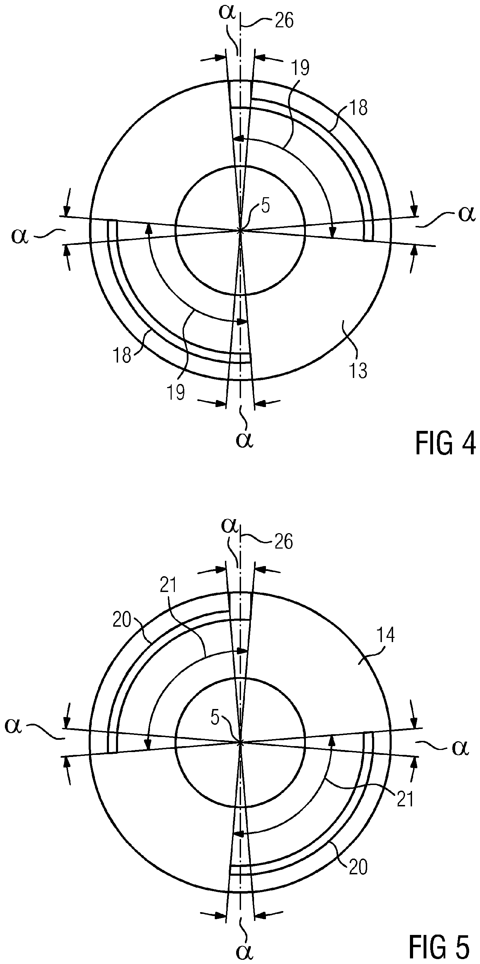

Unabhängig davon, ob ausschließlich der erste und der zweite Teilstapel vorhanden sind oder nicht, weisen entsprechend der Darstellung in FIG 4 die dritten Statorbleche 13 des ersten Teilstapels Ausnehmungen 18 auf. Die Ausnehmungen 18 sind in Tangentialrichtung langgestreckt. Sie sind in Tangentialrichtung gesehen gleichmäßig verteilt und überdecken jeweils einen ersten Winkelbereich 19. In analoger Weise weisen entsprechend der Darstellung in FIG 5 die dritten Statorbleche 14 des zweiten Teilstapels Ausnehmungen 20 auf. Auch die Ausnehmungen 20 sind in Tangentialrichtung langgestreckt. Weiterhin sind auch sie in Tangentialrichtung gesehen gleichmäßig verteilt. Sie überdecken jeweils einen zweiten Winkelbereich 21. Die in den Figuren 4 und 5 dargestellte Anzahl von jeweils zwei Ausnehmungen 18 bzw. 20 ist jedoch rein beispielhaft. Es könnten ebenso auch mehr Ausnehmungen 18, 20 vorhanden sein, beispielsweise drei, vier oder sechs Ausnehmungen 18, 20.

Wenn zwischen dem ersten und dem zweiten Teilstapel kein weiterer Teilstapel angeordnet ist, der erste Teilstapel und der zweite Teilstapel also aneinander angrenzen, überlappen die ersten und die zweiten Winkelbereiche 19, 21 einander und bilden zusammen einen Vollkreis um die Rotationsachse 5. Wenn mit n die Anzahl an Ausnehmungen 18, 20 pro drittem Statorblech 13, 14 bezeichnet ist, können beispielsweise die ersten und die zweiten Winkelbereiche 19, 21 sich jeweils über einen Winkel von 360°/2n + α erstrecken, die ersten Winkelbereiche 19 um 360°/n gegeneinander versetzt sein, in analoger Weise auch die zweiten Winkelbereiche 21 um 360°/n gegeneinander versetzt sein und weiterhin die zweiten Winkelbereiche 21 gegenüber den ersten Winkelbereichen 19 um 360°/2n versetzt sein. In diesem Fall überlappen sich die ersten Winkelbereiche 19 und die zweiten Winkelbereiche 21 über einen Überlappungswinkel von jeweils α. Der Überlappungswinkel α kann klein gegenüber den Winkelbereichen 19, 21 sein. Dieser Sachverhalt ist in den FIG 4 und 5 rein beispielhaft für den Fall dargestellt, dass die ersten und die zweiten Winkelbereiche 19, 21 sich jeweils über 100° erstrecken, der Überlappungswinkel α also 10° beträgt. Alternativ kann der Überlappungswinkel α auch relativ große Werte annehmen, beispielsweise 30° oder 40° betragen. Im Extremfall verbleibt zwischen den Ausnehmungen 18 jeweils nur ein relativ schmaler Steg und in analoger Weise auch zwischen den Ausnehmungen 20 jeweils nur ein relativ schmaler Steg.

Wenn zwischen dem ersten und dem zweiten Teilstapel noch mindestens ein weiterer Teilstapel angeordnet ist, ist es möglich, dass die ersten und zweiten Winkelbereiche 19, 21 deckungsgleich sind. In diesem Fall weisen die Statorbleche des weiteren Teilstapels analog zu den Statorblechen 13, 14 des ersten und des zweiten Teilstapels in Tangentialrichtung langgestreckte Ausnehmungen auf, welche - gegebenenfalls im Zusammenwirken mit den Ausnehmungen 18, 20 - die entsprechende Verteilung des Kühlfluids 10 zu den Ausnehmungen 18, 20 bewirken. Die Art und Weise, wie in diesem Fall die Ausnehmungen in den Statorblechen des weiteren Teilstapels anzuordnen sind, lässt sich ohne weiteres aus der Lehre der EP 2 814 139 A1 ableiten.

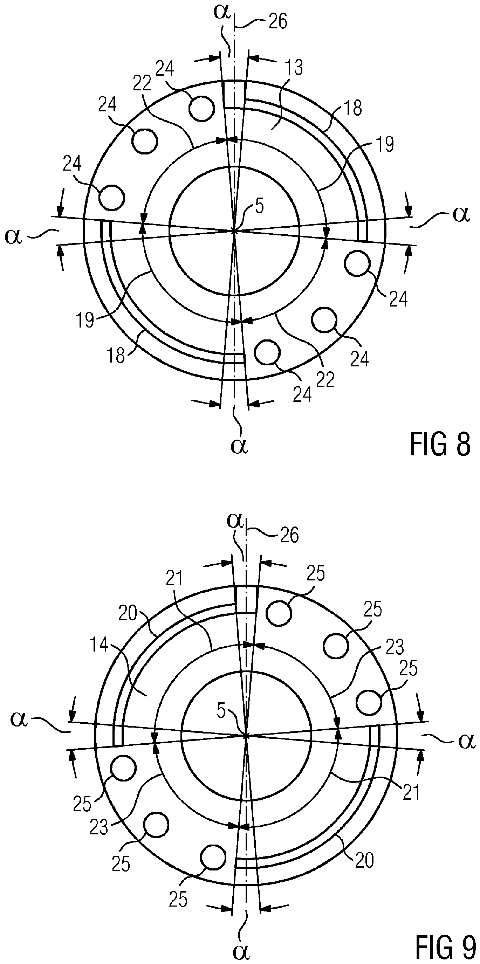

Die FIG 2 bis 5 zeigen eine erste mögliche Ausgestaltung des Stators 1 der elektrischen Maschine bzw. von deren Statorblechen 11 bis 14. Bei der Ausgestaltung der Statorbleche 11 bis 14 gemäß den FIG 2 bis 5 sind die ersten Kühlkanäle 15 ausschließlich in den ersten Winkelbereichen 19 angeordnet und sind weiterhin die zweiten Kühlkanäle 16 ausschließlich in den zweiten Winkelbereichen 21 angeordnet. Diese Ausgestaltung kann ergriffen werden, wenn der Überlappungswinkel α einen großen Wert aufweist und/oder eine in Tangentialrichtung gesehen ungleichmäßige Kühlung des Stators 1 hingenommen werden kann. Im Regelfall sind aber entsprechend der Darstellung in FIG 6 die ersten Kühlkanäle 15 nicht nur in den ersten Winkelbereichen 19 angeordnet, sondern zusätzlich auch in dritten Winkelbereichen 22. Die dritten Winkelbereiche 22 sind zu den ersten Winkelbereichen 19 komplementär. Zusammen bilden die ersten und dritten Winkelbereiche 19, 22 also überlappungsfrei einen Vollkreis. In analoger Weise sind in diesem Fall entsprechend der Darstellung in FIG 7 die zweiten Kühlkanäle 16 nicht nur in den zweiten Winkelbereichen 21 angeordnet, sondern zusätzlich auch in vierten Winkelbereichen 23. Die vierten Winkelbereiche 23 sind zu den zweiten Winkelbereichen 21 komplementär. Zusammen bilden die zweiten und vierten Winkelbereiche 21, 23 also überlappungsfrei einen Vollkreis. In diesem Fall können die dritten Statorbleche 13, 14 des ersten und des zweiten Teilstapels beispielsweise so ausgestaltet sein, wie dies nachfolgend in Verbindung mit den FIG 8 und 9 erläutert wird. Im übrigen sind die ersten und zweiten Statorbleche 11, 12 und die dritten Statorbleche 13, 14 des ersten und des zweiten Teilstapels analog zu der in Verbindung mit den FIG 2 bis 5 erläuterten Ausgestaltung ausgebildet.

Die Speisung der in den dritten Winkelbereichen 22 angeordneten ersten Kühlkanäle 15 kann in diesem Fall beispielsweise über die Ausnehmungen 20 der dritten Statorbleche 14 des zweiten Teilstapels erfolgen. Die ersten Kühlkanäle 15 sind daher, soweit sie in den dritten Winkelbereichen 22 angeordnet sind, in Axialrichtung bis zu den Ausnehmungen 20 der dritten Statorbleche 14 des zweiten Teilstapels verlängert. Zu diesem Zweck weisen entsprechend der Darstellung in FIG 8 die dritten Statorbleche 13 des ersten Teilstapels in den dritten Winkelbereichen 22 Ausnehmungen 24 auf, die mit diesen ersten Kühlkanälen 15 kongruent sind oder diese zumindest überlappen. In analoger Weise kann in diesem Fall die Speisung der in den vierten Winkelbereichen 23 angeordneten zweiten Kühlkanäle 16 beispielsweise über die Ausnehmungen 18 der dritten Statorbleche 13 des ersten Teilstapels erfolgen. Die zweiten Kühlkanäle 16 sind daher, soweit sie in den vierten Winkelbereichen 23 angeordnet sind, in Axialrichtung bis zu den Ausnehmungen 18 der dritten Statorbleche 13 des ersten Teilstapels verlängert. Zu diesem Zweck weisen entsprechend der Darstellung in FIG 9 die dritten Statorbleche 14 des zweiten Teilstapels in den vierten Winkelbereichen 23 Ausnehmungen 25 auf, die mit diesen zweiten Kühlkanälen 16 kongruent sind oder diese zumindest überlappen.

Es ist möglich, dass die ersten und die zweiten Statorbleche 11, 12 verschieden voneinander sind. Vorzugsweise jedoch sind die ersten und die zweiten Statorbleche 11, 12 gleichartig in dem Sinne, dass sie durch Verdrehen um einen ersten Drehwinkel um die Rotationsachse 5 und/oder Verschwenken um 180° um eine zur Rotationsachse 5 orthogonale Achse 26 ineinander überführbar sind. Beispielsweise können die zweiten Statorbleche 12 der FIG 3 aus den ersten Statorblechen 11 der FIG 2 dadurch hergestellt werden, dass die ersten Statorbleche 11 der FIG 2 um 90° um die Rotationsachse 5 verdreht werden. Alternativ könnten die zweiten Statorbleche 12 der FIG 3 aus den ersten Statorblechen 11 der FIG 2 dadurch hergestellt werden, dass die ersten Statorbleche 11 der FIG 2 um 180° um die Achse 26 verschwenkt werden. Im einfachsten Fall liegt sogar eine Entartung vor, dass die ersten und die zweiten Statorbleche 11, 12 identisch sind. Dies ist beispielsweise bei den ersten Statorblechen 11 von FIG 6 und den zweiten Statorblechen 12 von FIG 7 der Fall.

In analoger Weise sind vorzugsweise auch die dritten Statorbleche 13, 14 des ersten und des zweiten Teilstapels gleichartig in dem Sinne, dass sie durch Verdrehen um einen zweiten Drehwinkel um die Rotationsachse 5 und/oder Verschwenken um 180° um die orthogonale Achse 26 ineinander überführbar sind. Sofern die dritten Statorbleche 13, 14 die Kühlmittelzuführung 17 nicht enthalten, können beispielsweise die dritten Statorbleche 14 der FIG 5 (der FIG 9) aus den dritten Statorblechen 13 der FIG 4 (der FIG 8) dadurch hergestellt werden, dass die dritten Statorbleche 13 der FIG 4 (der FIG 8) um 90° um die Rotationsachse 5 verdreht werden. Alternativ könnten die dritten Statorbleche 14 der FIG 5 (der FIG 9) aus den dritten Statorblechen 13 der FIG 4 (der FIG 8) dadurch hergestellt werden, dass die dritten Statorbleche 13 der FIG 4 (der FIG 8) um 180° um die Achse 26 verschwenkt werden. Letzteres gilt unabhängig davon, ob die dritten Statorbleche 13, 14 die Kühlmittelzuführung 17 enthalten oder nicht.

Im Falle der Überführung von Statorblechen 11 bis 14 ineinander durch Verdrehen um die Rotationsachse 5 muss der Drehwinkel auf die Statornuten abgestimmt sein. Dies ist jedoch in der Regel ohne weiteres möglich, da die Anzahl an Statornuten in der Regel ein ganzzahliges Vielfaches von 12 ist und gängige Drehwinkel in der Regel ein ganzzahliges Vielfaches von 15° sind. Im Falle der Überführung von Statorblechen 11 bis 14 ineinander durch Verschwenken um eine zur Rotationsachse 5 orthogonale Achse 26 muss die Anzahl an Statornuten gerade sein. Dies ist jedoch in aller Regel der Fall.

In manchen Fällen ist es tolerierbar, dass das Kühlfluid 10 an den beiden Enden 6, 7 aus dem Stator 1 frei austritt. Dies gilt insbesondere dann, wenn das Kühlfluid 10 dielektrisch ist und/oder ein Gas ist. In diesem Fall können beispielsweise die Wickelköpfe der Statorwicklung durch das Kühlfluid 10 gekühlt werden In anderen Fällen können an den beiden Enden 6, 7 ringförmige Kühlmittelsammeleinrichtungen angeordnet sein. Die Kühlmittelsammeleinrichtungen können analog zur Kühlmittelverteileinrichtung 9 ausgebildet sein, werden in diesem Fall jedoch an ihren von den ersten bzw. zweiten Statorblechen 11, 12 abgewandten Seiten von Statorblechen begrenzt, welche die jeweilige Kühlmittelsammeleinrichtung axial abdichten. Alternativ können andersartig aufgebaute Kühlmittelsammeleinrichtungen vorhanden sein. Der Aufbau derartiger Kühlmittelsammeleinrichtungen ist dem Fachmann bekannt.

In manchen Fällen sind weiterhin die Statorbleche 11 bis 14 derart miteinander verbunden, dass nach radial innen und nach radial außen ein für das Kühlfluid 10 dichter Abschluss der Statorbleche 11 bis 14 gegeben ist. In anderen Fällen können zwar geringe Mengen des Kühlfluids 10 nach radial innen und/ oder nach radial außen austreten, der Austritt kann jedoch vernachlässigt und hingenommen werden. In wieder anderen Fällen kann radial innen und/oder radial außen ein entsprechender Abschluss erfolgen, beispielsweise bei einem Innenläufer radial außen durch ein den Stator 1 umgebenden Gehäuse und/ oder radial innen durch ein sogenanntes Spaltrohr 27 (siehe FIG 1). Diese Ausgestaltung kann insbesondere bei hohen Umfangsgeschwindigkeiten relevant sein, wie sie bei großen elektrischen Maschinen und/oder bei hoher Drehzahl auftreten.

Zusammengefasst betrifft die vorliegende Erfindung somit folgenden Sachverhalt:
Ein Stator 1 einer elektrischen Maschine erstreckt sich in einer Axialrichtung von einem ersten Ende 6 zu einem zweiten Ende 7. Er weist in einem in Axialrichtung gesehen zwischen den beiden Enden 6, 7 angeordneten Mittelbereich 8 eine Kühlmittelverteileinrichtung 9 für ein der Kühlmittelverteileinrichtung 9 zugeführtes Kühlfluid 10 auf. Der Stator 1 besteht vom ersten Ende 6 bis zum Mittelbereich 8 aus in Axialrichtung aufeinandergestapelten ersten Statorblechen 11, vom zweiten Ende 7 bis zum Mittelbereich 8 aus in Axialrichtung aufeinandergestapelten zweiten Statorblechen 12. Die ersten Statorbleche 11 sind derart ausgebildet, dass sie in Axialrichtung verlaufende erste Kühlkanäle 15 für das Kühlfluid 10 bilden, die zweiten Statorbleche 12 derart, dass sie in Axialrichtung verlaufende zweite Kühlkanäle 16 für das Kühlfluid 10 bilden. Die Kühlmittelverteileinrichtung 9 ist derart ausgebildet, dass sie das Kühlfluid 10 über eine Kühlmittelzuführung 17 entgegennimmt, um die Axialrichtung herum über den Umfang verteilt und den ersten und zweiten Kühlkanälen 15, 16 zuführt. Die Kühlmittelverteileinrichtung 9 besteht aus in Axialrichtung aufeinandergestapelten dritten Statorblechen 13, 14, so dass der Stator 1 vom ersten Ende 6 zum zweiten Ende 7 durchgängig aus Statorblechen 11 bis 14 besteht.

Die vorliegende Erfindung weist viele Vorteile auf. Insbesondere kann auf einfache Weise erreicht werden, dass der Stator 1 über seine gesamte axiale Länge gesehen aus Statorblechen 11 bis 14 besteht und dennoch eine effiziente Kühlung des Stators 1 erreicht werden kann. Die Leistungsdichte der elektrischen Maschine kann dadurch maximiert werden. Dies gilt gleichermaßen für die Leistung bezogen auf das Volumen und die Leistung bezogen auf die Masse der elektrischen Maschine. Die Kosten können reduziert werden. Auch können Wirbelstromverluste im Stator 1 minimiert werden.

Der erfindungsgemäße Stator 1 ist prinzipiell bei jeder elektrischen Maschine einsetzbar. Besonders bietet sich der Einsatz jedoch bei einer elektrischen Maschine an, bei der die Verluste im Rotor relativ gering sind. Beispiele derartiger elektrischer Maschinen sind permanenterregte Synchronmaschinen und Reluktanzmaschinen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stator einer elektrischen Maschine,
- wobei der Stator sich in einer Axialrichtung von einem ersten Ende (6) zu einem zweiten Ende (7) erstreckt,
- wobei der Stator in einem in Axialrichtung gesehen zwischen dem ersten und dem zweiten Ende (6, 7) angeordneten Mittelbereich (8) eine Kühlmittelverteileinrichtung (9) für ein der Kühlmittelverteileinrichtung (9) zugeführtes Kühlfluid (10) aufweist,
- wobei der Stator vom ersten Ende (6) bis zum Mittelbereich (8) aus in Axialrichtung aufeinandergestapelten ersten Statorblechen (11) besteht,
- wobei die ersten Statorbleche (11) derart ausgebildet sind, dass sie in Axialrichtung verlaufende erste Kühlkanäle (15) für das Kühlfluid (10) bilden,
- wobei der Stator vom zweiten Ende (7) bis zum Mittelbereich (8) aus in Axialrichtung aufeinandergestapelten zweiten Statorblechen (12) besteht,
- wobei die zweiten Statorbleche (12) derart ausgebildet sind, dass sie in Axialrichtung verlaufende zweite Kühlkanäle (16) für das Kühlfluid (10) bilden,
- wobei die Kühlmittelverteileinrichtung (9) derart ausgebildet ist, dass sie das Kühlfluid (10) über eine Kühlmittelzuführung (17) entgegennimmt, um die Axialrichtung herum über den Umfang verteilt und den ersten und zweiten Kühlkanälen (15, 16) zuführt,
**dadurch gekennzeichnet, dass** die Kühlmittelverteileinrichtung (9) aus in Axialrichtung aufeinandergestapelten dritten Statorblechen (13,14) besteht, so dass der Stator vom ersten Ende (6) zum zweiten Ende (7) durchgängig aus Statorblechen (11 bis 14) besteht.

2. Stator nach Anspruch 1, **dadurch gekennzeichnet,**
- **dass** die dritten Statorbleche (13, 14) einen ersten und einen zweiten Teilstapel bilden,
- **dass** der erste Teilstapel an eines der ersten Statorbleche (11) angrenzt,
- **dass** der zweite Teilstapel an eines der zweiten Statorbleche (12) angrenzt,
- **dass** die dritten Statorbleche (13) des ersten Teilstapels Ausnehmungen (18) aufweisen, die in Umfangsrichtung gesehen langgestreckt sind, über den Umfang gesehen gleichmäßig verteilt sind und über den Umfang gesehen erste Winkelbereiche (19) überdecken,
- **dass** die dritten Statorbleche (14) des zweiten Teilstapels Ausnehmungen (20) aufweisen, die in Umfangsrichtung gesehen langgestreckt sind, über den Umfang gesehen gleichmäßig verteilt sind und über den Umfang gesehen zweite Winkelbereiche (21) überdecken.

3. Stator nach Anspruch 2, **dadurch gekennzeichnet, dass** der erste Teilstapel und der zweite Teilstapel aneinander angrenzen, dass die ersten und die zweiten Winkelbereiche (19,21) einander überlappen und dass die ersten und die zweiten Winkelbereiche (19,21) zusammen einen Vollkreis um die Axialrichtung bilden.

4. Stator nach Anspruch 2 oder 3, **dadurch ge**- **kennzeichnet**, dass die ersten Kühlkanäle (15) ausschließlich in den ersten Winkelbereichen (19) angeordnet sind und dass die zweiten Kühlkanäle (16) ausschließlich in den zweiten Winkelbereichen (21) angeordnet sind.

5. Stator nach Anspruch 2 oder 3, **dadurch** g e - **kennzeichnet**,
- dass die ersten Kühlkanäle (15) nicht nur in den ersten Winkelbereichen (19), sondern auch in zu den ersten Winkelbereichen (19) komplementären dritten Winkelbereichen (22) angeordnet sind,
- dass die zweiten Kühlkanäle (16) nicht nur in den zweiten Winkelbereichen (21), sondern auch in zu den zweiten Winkelbereichen (21) komplementären vierten Winkelbereichen (23) angeordnet sind,
- dass die dritten Statorbleche (13) des ersten Teilstapels in den dritten Winkelbereichen (22) mit den in den dritten Winkelbereichen (22) angeordneten ersten Kühlkanälen (15) kongruente oder zumindest überlappende Ausnehmungen (24) aufweisen und
- dass die dritten Statorbleche (14) des zweiten Teilstapels in den vierten Winkelbereichen (23) mit den in den vierten Winkelbereichen (23) angeordneten zweiten Kühlkanälen (16) kongruente oder zumindest überlappende Ausnehmungen (25) aufweisen.

6. Stator nach einem der obigen Ansprüche, **dadurch gekennzeichnet, dass** die ersten und die zweiten Statorbleche (11,12) gleichartig in dem Sinne sind, dass sie durch Verdrehen um einen ersten Drehwinkel um die Axialrichtung und/oder Verschwenken um 180° um eine zur Axialrichtung orthogonale Achse (26) ineinander überführbar sind.

7. Stator nach einem der obigen Ansprüche, **dadurch gekennzeichnet, dass** die dritten Statorbleche (13,14) des ersten und des zweiten Teilstapels gleichartig in dem Sinne sind, dass sie durch Verdrehen um einen zweiten Drehwinkel um die Axialrichtung und/oder Verschwenken um 180° um eine zur Axialrichtung (26) orthogonale Achse ineinander überführbar sind.

8. Elektrische Maschine mit einem Stator (1) nach einem der obigen Ansprüche und einem Rotor (2), wobei der Rotor (2) relativ zum Stator (1) derart gelagert ist, dass er um eine mit der Axialrichtung identische Rotationsachse (5) rotierbar ist.
